# FASCICULE DE BREVET EUROPEEN

(11) **EP 4 570 849 B1**
(45) Date de publication et mention de la délivrance du brevet: **25.03.2026**
(21) Numéro de dépôt: 24219116.1
(22) Date de dépôt: 11.12.2024
(51) Int. Cl.: C08J 7/12, C08L 67/02, B29C 37/00, B29C 33/68, C08G 63/183

(54) **FILM TRAITÉ PLASMA ET SON UTILISATION POUR LA FABRICATION DE PIÈCES EN MATÉRIAU COMPOSITE, PROCÉDÉ DE FABRICATION D'UNE TELLE PIÈCE**
PLASMABEHANDELTE FOLIE UND IHRE VERWENDUNG ZUR HERSTELLUNG VON TEILEN AUS VERBUNDWERKSTOFF, VERFAHREN ZUR HERSTELLUNG EINES SOLCHEN TEILS
PLASMA-TREATED FILM AND USE THEREOF FOR MANUFACTURING PARTS MADE OF COMPOSITE MATERIAL, METHOD FOR MANUFACTURING SUCH A PART

(30) Priorité: 15.12.2023 FR 2314332
(43) Date de publication de la demande: 18.06.2025
(73) Titulaire: Diatex, 69230 Saint-Genis-Laval (FR)
(72) Inventeur: DE MULATIER, Bernard, 69007 LYON (FR)
(74) Mandataire: Ipsilon

(56) Documents cités:
- EP-A1- 3 892 450
- EP-A2- 2 345 528
- WO-A1-00/18555
- WO-A1-2010/041407
- WO-A1-2013/160437
- WO-A1-2023/152355
- FR-A1- 2 868 008

## Description

### Domaine de l'invention

La présente invention concerne un procédé de fabrication utilisant un film thermoplastique de démoulage, pour le moulage de pièces en matériau composite.

Les domaines d'utilisation de la présente invention incluent notamment l'industrie aéronautique, la fabrication de pales d'éoliennes, de coques de bateaux, ou de pièces automobiles.

### Etat antérieur de la technique

Dans le cadre de la présente invention, un matériau composite comprend au moins un matériau fibreux et une résine polymère réticulable ou un matériau thermoplastique, dont l'association permet d'obtenir un complexe dont les propriétés surpassent celles des matériaux de départ. Ainsi, les pièces en matériau composite présentent de nombreux avantages liés notamment à leurs propriétés de résistance, de légèreté et de facilité de mise en forme. Ces pièces peuvent être réalisées par moulage sous vide ou par infusion sous vide, ou toute autre technique connue de la personne du métier.

Un film couvreur et protecteur, appelé film séparateur, est posé sur la pièce pendant sa réalisation, le cas échéant sur un tissu d'arrachage qui recouvre la pièce. Il peut être à son tour recouvert d'un filet drainant ou d'un tissu drainant ou d'un feutre drainant ou d'une grille drainante. Le film séparateur doit présenter des propriétés démoulantes. Il est à base de polymère, qui est un homopolymère ou un copolymère, de préférence un homopolymère. Ce polymère est le plus souvent en polyester ou en polyoléfine (polyméthylpentène ou PMP ; ou polyéthylène, ou polypropylène), ou en fluoropolymère (ou polymère fluoré) (tel que : résine d'éthylène-propylène fluoré ou FEP ; poly(éthylène-co-tétrafluoroéthylène) ou ETFE ; polytétrafluoroéthylène ou PTFE), voire en polyamide ou en polyimide. De préférence, il est en polyéthylène ou en PTFE.

Par « à base de », on entend selon l'invention constitué majoritairement, voire principalement, de.

Le film séparateur peut être démoulant par nature (typiquement dans le cas d'un fluoropolymère ou d'une polyoléfine, tel le polyéthylène ou le polypropylène), ou il peut être rendu démoulant par enduction (typiquement dans le cas du polyester).

Les polymères enduits présentent le problème que leur revêtement d'enduction peut être transféré au moins partiellement par relargage dans le matériau composite, ce qui n'est pas souhaitable. En outre, les polymères d'enduction présentent souvent des problèmes de recyclage. Par exemple, les polyoléfines thermoplastiques revêtues de silicone comportent trop de silicone pour pouvoir être recyclées.

Les polyoléfines présentent également l'inconvénient d'une tenue en température faible, typiquement inférieure à 150°C, bien qu'elles présentent naturellement des propriétés démoulantes.

En revanche, le PET est connu pour présenter une bonne tenue en température, souvent élevée (c'est-à-dire généralement supérieure à 150°C), mais ne possède pas de propriétés démoulantes. Ce défaut de propriétés démoulantes est d'ailleurs le cas des polyesters mais également, quoi que dans une moindre mesure, des polymamides et des polyimides.

D'autre part, les polymères fluorés tels que le PTFE présentent également une bonne tenue à température élevée. Cependant, ce ne sont pas des matériaux compatibles avec l'environnement. Leur utilisation pourrait même être interdite par la réglementation applicable d'ici quelques années.

Les documents WO 2023/152355 A1, WO 2013/160437 A1 et WO 2010/041407 A1 décrivent des films de séparation disposés entre un moule et un renfort fibreux permettant la séparation du moule une fois la pièce en matériaux composite fabriquée.

Les documents EP 3 892 450 A1 et EP 2 345 528 A2 décrivent également des procédés de fabrication de pièce composite pour lesquels un film de séparation est positionné entre le moule et le renfort.

Les documents WO 2010/041407 A1 et WO 00/18555 A1 décrivent des procédés de fabrication de pièces composites. Le document FR 2 868 008 est également cité.

Il existe néanmoins un besoin de disposer d'un film thermoplastique de démoulage compatible avec l'environnement et pouvant être recyclé, ce film étant destiné à être positionné entre un renfort fibreux et un film de mise sous vide.

### Exposé de l'invention

La Demanderesse a mis au point un film thermoplastique démoulant pour le moulage, typiquement sous vide, de pièces en matériau composite, présentant une grande facilité d'utilisation, compatible avec l'environnement et pouvant être recyclé.

Plus précisément, la présente invention concerne un procédé de préparation d'une pièce composite, au moyen d'un film thermoplastique de démoulage, ayant été traité sur au moins une surface par traitement plasma par au moins un composé choisi dans le groupe formé par les composés silicones, les composés fluorés et les composés carbonés, ledit film thermoplastique de démoulage étant destiné à être utilisé pour le moulage d'une pièce en composite à base d'une résine polymère ou d'un matériau thermoplastique, de préférence d'une résine polymère, et d'un renfort fibreux. Les composés fluorés sont envisagés pour le traitement, mais ne constituent pas un cas préféré, pour les raisons exposées ci-avant.

Le film thermoplastique de démoulage peut avoir subi un traitement plasma sur l'intégralité d'une de ses deux faces, ou sur l'intégralité de ses deux faces.

Le composé choisi dans le groupe formé par les composés silicones, les composés fluorés et les composés carbonés est de préférence choisi dans le groupe formé par les composés silicones et les composés carbonés, de façon plus préférée choisi parmi les composés silicones. De façon encore plus préférée, ledit composé est un polysiloxane.

Le moulage est effectué par utilisation d'une résine polymère, thermodurcissable et donc qui va réticuler, ou d'un matériau thermoplastique, qui va fondre sous l'effet de la chaleur puis durcir, et d'un renfort fibreux. Ce renfort est avantageusement en fibres d'au moins un matériau choisi parmi le carbone, le verre, le lin et l'aramide, ainsi qu'il est connu de la personne du métier.

Le moulage est effectué de préférence sous vide et si nécessaire à température élevée, de préférence par moulage sous vide ou infusion sous vide, mais il peut également être utilisé un procédé de type RTM (ou moulage par transfert de résine pour « *resin transfer moulding »* en anglais), un enroulement filamentaire, un estampage, un moulage par contact, une pultrusion, un moulage par gonflage baudruche, ou tout autre technique connue de la personne du métier. Toutes ces techniques de moulage sont bien connues de la personne du métier.

Une pièce composite peut être préparée par mise en œuvre d'un renfort fibreux et d'une résine polymère thermodurcissable. Il peut notamment s'agir d'un renfort pré-imprégné de résine polymère ou d'un renfort sec qui est ensuite infusé.

La résine polymère est généralement choisie dans le groupe formé par les polyesters, les polymères vinylesters, les polymères époxys, les polymères phénoliques, les polymères acryliques, les polyuréthanes, et leurs mélanges. La résine est avantageusement une résine polymère thermodurcissable dont la réticulation se fait généralement à température élevée, dans le cas d'un renfort pré-imprégné, et à température ambiante, dans le cas d'un renfort sec.

Dans le cas particulier d'un renfort pré-imprégné, à titre indicatif, la réticulation est généralement obtenue entre 120 et 250 °C.

Dans le cas d'un renfort sec, l'infusion est effectuée généralement à température comprise entre 10 °C et 40 °C, par exemple à température ambiante (environ 20 °C), et peut subir une post-cuisson à des températures plus élevées (120°C).

Par intervalle « de X à Y » ou « entre X et Y », on entend selon l'invention que les bornes (X et Y) sont incluses, à moins qu'il ne soit spécifié autrement.

Une pièce composite peut également être préparée par mise en œuvre d'un renfort fibreux et d'un matériau thermoplastique. Il peut notamment s'agir d'un renfort pré-imprégné de matériau thermoplastique.

Le matériau thermoplastique est généralement choisi dans le groupe formé par les polycarbonates (PC, les polyamides (PA), les polyetherimides (PEI), les polyétheréthercétones (PEEK), les polyéthercétones (PEK) et leurs mélanges. Le matériau thermoplastique est avantageusement mis à fondre pour qu'il puisse se déformer et ainsi prendre la forme de la pièce finale.

Dans le cadre de l'invention, le film thermoplastique de démoulage est avantageusement à base d'un polymère choisi dans le groupe formé par les polyesters, les polyamides, les polyoléfines, les polyimides et leurs copolymères, de préférence choisi dans le groupe formé par les polyesters, les polyamides, les polypropylènes, les polyéthylènes, les polyimides et leurs copolymères, et de façon encore plus préférée les polyesters. Le polyester est de préférence le poly(téréphtalate d'éthylène) (PET).

Par « film thermoplastique », on désigne selon l'invention un film principalement en polymère (homopolymère ou copolymère) thermoplastique. Par « film de démoulage », on désigne selon l'invention un film qui a été fonctionnalisé par traitement plasma sur au moins une de ses faces, de façon à avoir des propriétés de film démoulant, c'est-à-dire permettant le démoulage. La fonctionnalisation conduit à la création de groupes, typiquement silicones (qui sont des polysiloxanes) dans le cas de l'utilisation d'un composé silicone, sur au moins une surface du film. Cette fonctionnalisation est soit réalisée sur un polymère à propriétés peu ou pas démoulantes qui est ainsi rendu démoulant, soit sur un polymère à propriétés démoulantes qui est ainsi rendu plus démoulant.

Le film thermoplastique de démoulage peut être utilisé directement, par exemple en sortie d'extrusion (dans le cas d'un gonflage ou d'un moulage de type « cast »), après traitement plasma. Mais il peut également subir au moins une autre opération avant utilisation, par exemple choisie parmi les : embossage, impression, perforation (trous), colorisation (incluant la mise en transparence), opacification, aluminisation, réalisée avant ou après le traitement plasma.

Le traitement du film thermoplastique de démoulage est opéré avantageusement par traitement plasma en atmosphère contrôlée usuellement sous enceinte, en présence du composé ou sous vide, de préférence en atmosphère contrôlée. Par « atmosphère contrôlée », on entend ici une atmosphère constituée de gaz neutre tel que de l'argon ou de l'azote.

Ce traitement plasma permet de greffer une quantité suffisante de composé (se transformant généralement chimiquement) en surface, conduisant à une fonctionnalisation de ladite surface du film. Cette fonctionnalisation en surface n'est pas à considérer comme un revêtement (« coating » en anglais) au sens strict. En outre, contrairement aux films fluorés ou aux films recouverts de silicone, les films traités plasma selon l'invention peuvent être recyclés.

Ainsi, dans le cas préféré où le composé est un composé silicone, le traitement plasma permet de créer des fonctions silicones en surface du film.

Les silicones sont, selon la définition de l'IUPAC, la famille des composés chimiques constitués d'un squelette de silicium et d'oxygène, de formule brute générale [-OSiR₂-], où R n'est pas H. Ils sont oligomériques ou polymériques, et généralement considérés comme possédant une structure non ramifiée. Le composé silicone utilisé pour le traitement plasma est de préférence un polysiloxane.

A titre d'exemple, le composé siliconé utilisé pour préparer le film plastique de démoulage peut être choisi parmi les siloxanes cycliques (par exemple hexaméthylcyclotrisiloxane, octaméthylcyclopentasiloxane, décaméthylcyclopentasiloxane, dodécaméthylcyclohexasiloxane, vinyl 2, 4,6,8-tetramethyl-2,4,6,8-tetravinylcyclotetrasiloxane) et les siloxanes linéaires (par exemple de type [SiO(CH₃]n ave n ≥ 2, notamment hexaméthyldisiloxane, octaméthyltrisiloxane, décaméthyltetrasiloxane, dodécaméthylpentasiloxane, 1 ,1 ,3,3-tetraméthyl-l ,3-divinyldisiloxane).

La personne du métier saura appliquer un traitement plasma grâce à ses connaissances générales.

Avantageusement, le traitement plasma d'un film thermoplastique comprend les étapes suivantes (préférentiellement en continu) :
- préparation d'un gaz plasmagène (avantageusement l'argon, l'hélium ou leurs mélanges),
- préparation d'un précurseur (fluoré, siliconé ou carboné ; par exemple un précurseur parmi les siloxanes cycliques, les siloxanes linéaires et leurs mélanges),
- polymérisation plasma par exposition d'au moins une face du film thermoplastique à un dépôt par plasma (par exemple un plasma froid) sous atmosphère de gaz plasmagène et en présence du précurseur,
- obtention du film thermoplastique de démoulage après formation et dépôt d'une couche comprenant au moins un composé fluoré, siliconé ou carboné.

La personne du métier saura adapter le traitement plasma, en particulier le temps d'exposition (par exemple 50 à 2500 millisecondes), la température du traitement (par exemple à moins de 100°C), la pression de l'enceinte (sous vide ou atmosphérique), le débit du précurseur (par exemple 50 à 200 g/h), la vitesse de défilement du film (par exemple 9 à 70 m/min) ou le débit de gaz plasmagène (par exemple 45 à 80 m³/h).

Dans un procédé de moulage, le film thermoplastique de démoulage peut avantageusement être utilisé, généralement en monocouche, puis retiré sans difficulté.

Le film thermoplastique de démoulage selon l'invention peut être dépourvu de fluor.

En outre, dans le cas préféré où le composé est un composé silicone, la quantité relativement faible de silicone obtenu en surface par ce traitement permet très avantageusement le recyclage ultérieur du film thermoplastique de démoulage, ce qui n'est pas possible dans le cas d'une enduction de silicone sur le film. En outre, dans ce cas, le polymère traité plasma est moins nocif à produire et à traiter, comparativement aux fluoropolymères utilisés tels quels.

Le traitement plasma peut être réalisé sous vide ou sous atmosphère contrôlée. Il est généralement réalisé en atmosphère contrôlée, en l'absence d'oxygène et généralement d'humidité.

Le traitement plasma est un procédé de traitement classique ainsi qu'il est connu de la personne du métier. Les conditions de température et de durée sont usuelles. Par durée, on entend le temps de passage du film dans une enceinte de traitement plasma.

Le film thermoplastique de démoulage peut également être à base de polyester (PET) thermoplastique.

Le film thermoplastique de démoulage peut présenter des trous de diamètre moyen de 0,1 à 1,5 mm, de préférence de 0,5 à 0,8 mm.

**Le film** thermoplastique de démoulage peut présenter des trous ayant une surface avantageusement comprise entre 0,03 et 7,1 mm², plus avantageusement entre 0,79 et 2 mm².

Le film thermoplastique de démoulage présente une épaisseur avantageusement comprise entre 1 et 500 µm, de préférence entre 5 et 100 µm, de façon encore plus préférée entre 5 et 50 µm.

Lors de la mise sous vide et éventuellement sous température élevée, la résine polymère ou le matériau thermoplastique est réparti(e) de manière homogène et est généralement presque intégralement retenu(e) par le film thermoplastique de démoulage sauf si ledit film est perforé, auquel cas la résine polymère ou le matériau thermoplastique peut passer à travers le film thermoplastique de démoulage.

Le film thermoplastique de démoulage peut être associé à un drainant (par exemple un filet drainant ou un tissu drainant ou un feutre drainant ou une grille drainante), et/ou à un tissu d'arrachage. Les combinaisons suivantes sont particulièrement préférées :
- film thermoplastique de démoulage seul ;
- film thermoplastique de démoulage associé à un filet drainant ;
- film thermoplastique de démoulage associé à un tissu drainant ;
- film thermoplastique de démoulage associé à une grille drainante ;
- film thermoplastique de démoulage associé à un feutre drainant ;
- film thermoplastique de démoulage associé à un tissu d'arrachage ;
- film thermoplastique de démoulage associé à un filet drainant et à un tissu d'arrachage ;
- film thermoplastique de démoulage associé à un feutre drainant et à un tissu d'arrachage.

Différents moyens d'association (film de démoulage + drainant et/ou tissu d'arrachage) peuvent être envisagés, dans la limite où la perméabilité globale du film thermoplastique de démoulage n'est pas substantiellement modifiée. Ainsi, l'association peut être réalisée par collage par points de colle.

Par A « et/ou » B, on désigne soit A, soit B soit A et B.

Comme il est connu, le tissu d'arrachage permet notamment de structurer la surface de la pièce composite après arrachage, en particulier pour faciliter l'accrochage de couches déposées ultérieurement telles que colle, peinture... Il permet également de protéger la pièce composite entre sa fabrication et son utilisation.

Comme il est connu, le drainant permet d'aider le drainage qui concerne généralement l'air dans le cas du feutre ou du tissu, et la résine polymère ou le matériau thermoplastique dans le cas d'une grille ou d'un filet.

Le film thermoplastique de démoulage peut être associé à un film de renfort, avantageusement un textile non-tissé, un textile tricot ou un film contrecollé à base de polyester. Ce film de renfort est sur la face supérieure du film thermoplastique de démoulage, c'est-à-dire sur la face opposée à la face en regard de la pièce en matériau composite. Le film de renfort est donc en contact avec le feutre drainant ou avec le film de mise sous vide. Le film de renfort permet d'améliorer la résistance à la déchirure du thermoplastique de démoulage.

La présente invention concerne un procédé de fabrication par moulage d'une pièce en un matériau composite, comprenant les étapes suivantes :
- formation dans un moule de l'ébauche de la pièce en matériau composite, ladite ébauche comprenant un renfort fibreux et éventuellement une résine polymère ou un matériau thermoplastique ;
- mise en place du film thermoplastique de démoulage décrit ci-dessus et ci-après, de manière à totalement recouvrir la surface de ladite ébauche qui n'est pas en contact avec le moule ;
- mise en place d'un film de mise sous vide, de manière à recouvrir le film thermoplastique de démoulage ;
- étanchéification de l'ensemble du moule et du film de mise sous vide, par exemple par mise en place d'un mastic d'étanchéité entre le moule et le film de mise sous vide ;
- mise sous vide et évacuation des gaz compris entre le film de mise sous vide et le moule,
et lorsque l'ébauche ne comprend pas de résine polymère ou de matériau thermoplastique, infusion de résine polymère ou de matériau thermoplastique ;
- réticulation de la résine polymère ou durcissement du matériau thermoplastique ;
- retrait du film de mise sous vide ;
- retrait du film thermoplastique de démoulage.

Ce procédé peut comprendre une étape de mise en place d'un drainant (par exemple un filet drainant ou un feutre drainant ou un tissu drainant ou une grille drainante), et/ou d'un tissu d'arrachage, sous ou sur le film thermoplastique de démoulage. Dans ce cas, le procédé comprend également une étape de retrait du drainant et/ou du tissu d'arrachage. Typiquement le tissu d'arrachage est placé entre le renfort et le film thermoplastique de démoulage, alors que le drainant est placé au-dessus du film thermoplastique de démoulage et au-dessous du film de mise sous vide.

Comme déjà indiqué, le film thermoplastique de démoulage a été traité sur au moins une surface par traitement plasma par au moins un composé choisi dans le groupe formé par les composés silicones, les composés fluorés et les composés carbonés. Dans la pratique, la surface traitée plasma est en contact avec l'ébauche ou, le cas échéant, avec le tissu d'arrachage.

Dans le cas d'un procédé de moulage sous vide, la résine ou le matériau thermoplastique est présent(e) dans l'ébauche dès le départ (cas du renfort fibreux pré-imprégné), puis la résine est réticulée ou le matériau thermoplastique est fondu puis uniformément réparti pendant le traitement sous vide, généralement à température élevée. Cette étape est généralement suivie d'un durcissement (avantageusement lors d'un refroidissement).

Dans ce cas, les étapes du moulage sous vide sont généralement les suivantes :
- formation dans un moule de l'ébauche de la pièce en matériau composite ; l'ébauche comprenant de la résine polymère ou du matériau thermoplastique, et un renfort fibreux ;
- mise en place du film thermoplastique de démoulage, de manière à totalement recouvrir la surface de ladite ébauche qui n'est pas en contact avec le moule ;
- mise en place d'un film de mise sous vide, par-dessus le film thermoplastique de démoulage ;
- étanchéification de l'ensemble du moule et du film de mise sous vide ;
- mise sous vide et évacuation des gaz compris entre le film de mise sous vide et le moule ;
- réticulation de la résine polymère, ou fusion et répartition uniforme du matériau thermoplastique ;
- retrait du film de mise sous vide ;
- retrait du film thermoplastique de démoulage.

Dans le cas d'un procédé d'infusion sous vide, la résine à réticuler ou le matériau thermoplastique est infusé(e), aspiré(e) par le vide dans le renfort fibreux une fois le vide créé, puis la résine est réticulée ou le matériau fondu est durci une fois en place.

L'invention et les avantages qui en découlent ressortiront mieux des figures et exemples suivants donnés pour illustrer l'invention et de manière non limitative.

### Description sommaire des figures

La figure 1 est une vue en coupe du film thermoplastique de démoulage selon l'invention, utilisé en association avec un tissu d'arrachage et un feutre drainant, préalablement au procédé de fabrication d'une pièce en un matériau composite.
La figure 2 est une vue en coupe du film thermoplastique de démoulage selon l'invention, utilisé seul, préalablement au procédé de fabrication d'une pièce en un matériau composite.

### Description détaillée de l'invention

Le procédé de fabrication d'une pièce en un matériau composite imprégné d'une résine polymère comprend plusieurs étapes, dans le cas particulier et préféré d'un moulage sous vide décrit ici.

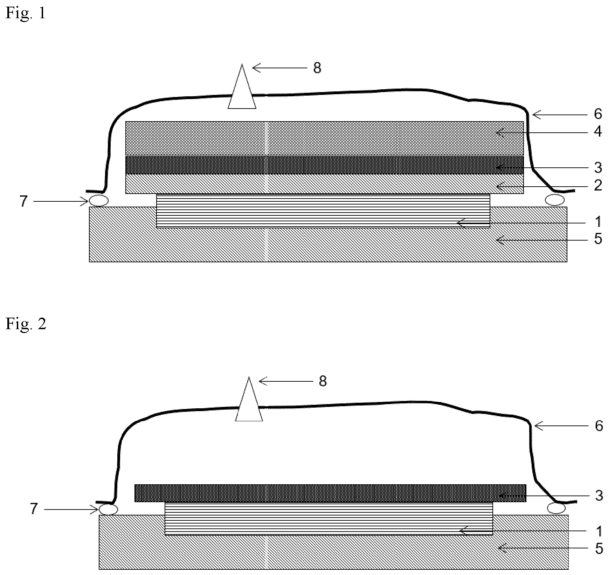

Sur les figures 1 et 2, le renfort fibreux est un tissu de fibres de verre pré-imprégné d'une résine. Il est placé dans un moule (5) de manière à former une ébauche (1) de la pièce en matériau composite imprégné de la résine polymère.

Un tissu d'arrachage (2) et un feutre drainant (4) peuvent être avantageusement mis en place, encadrant le film thermoplastique de démoulage (3). Cela crée une association du tissu d'arrachage, du film thermoplastique de démoulage et du feutre drainant (2, 3, 4) (figure 1).

Un film de mise sous vide (6) est ensuite placé sur le mastic d'étanchéité (7), de manière à recouvrir le feutre drainant (4). Les gaz sont évacués par mise sous vide (8). L'évacuation des gaz est donc réalisée à travers le film thermoplastique de démoulage (3). Les gaz sont drainés le cas échéant par le feutre drainant (4). En outre, la mise sous vide permet de répartir la résine uniformément au sein du renfort fibreux. Elle pénètre également le tissu d'arrachage (2).

La résine est ensuite réticulée à température ambiante, ou à température élevée (typiquement dans le cas d'un renfort pré-imprégné).

Après réticulation, le film de mise sous vide et le feutre drainant sont retirés. Le film thermoplastique de démoulage et le tissu d'arrachage peuvent être maintenus sur la pièce en matériau composite comme films protecteurs, puis retirés dans un deuxième temps pour des opérations secondaires.

Lorsqu'il n'y a ni feutre drainant ni tissu d'arrachage l'ensemble des couches 2, 3 et 4 est remplacé par une monocouche de film thermoplastique (3), et les étapes sont simplifiées (figure 2).

### Exemples de réalisation

L'exemple est réalisé d'après le schéma de la figure 1.

Une pièce en matériau composite est réalisée à partir d'un renfort fibreux et d'une résine polymère (ratio 66/34).

Le renfort fibreux est un tissu de fibres de carbone pré-imprégné de résine époxy.

Le film thermoplastique de démoulage est un film en PET dont une surface a été traitée par plasma, à partir d'un précurseur de type HMDSO (Hexamethyldisiloxane). Il présente une épaisseur de 12 µm. Le diamètre des trous est de 0,5 mm. Le traitement plasma a conduit à créer une enduction « nanométrique » hydrophobe.

Un tissu d'arrachage en polyester (commercialisé par la société DIATEX sous la référence PES90) est présent et a un grammage de 90 g/m².

L'association du tissu d'arrachage et du film thermoplastique de démoulage est avantageusement recouverte d'un feutre drainant en polyester de 340 g /m².

Après installation du film de mise sous vide en polyamide, l'ébauche est mise sous vide, à - 1 bar (- 10⁵ Pa). L'ensemble est ensuite mis en autoclave, à une pression de 7 bar (7.10⁵ Pa). Le vide est réduit à - 0,2 bar (- 0,2.10⁵ Pa), lorsque la pression de l'autoclave atteint la valeur de 1 bar (10⁵ Pa).

La résine est ensuite réticulée à 180 °C pendant 120 min. Après refroidissement à 60 °C, l'ensemble est sorti de l'autoclave pour démoulage.

Après avoir retiré le film de mise sous vide, le feutre de drainage est retiré de la pièce, sans effort, grâce à l'action « release » du film de démoulage. L'ensemble est démoulé en une seule pièce, sans déchet sur la pièce, ou dans ce cas, sur le tissu d'arrachage.

## Revendications

1. Procédé de fabrication par moulage d'une pièce en un matériau composite, comprenant les étapes suivantes :
- formation dans un moule (5) de l'ébauche (1) de la pièce en matériau composite, ladite ébauche comprenant un renfort fibreux et éventuellement une résine polymère ou un matériau thermoplastique ;
- mise en place d'un film thermoplastique de démoulage (3), de manière à totalement recouvrir la surface de ladite ébauche qui n'est pas en contact avec le moule ;
- mise en place d'un film de mise sous vide (6), de manière à recouvrir le film thermoplastique de démoulage (3) ;
- étanchéification de l'ensemble du moule (5) et du film de mise sous vide (6) ;
- mise sous vide et évacuation des gaz compris entre le film de mise sous vide (6) et le moule (5),
et lorsque l'ébauche ne comprend pas de résine polymère ou de matériau thermoplastique, infusion de résine polymère ou de matériau thermoplastique ;
- réticulation de la résine polymère, ou fusion et répartition uniforme du matériau thermoplastique ;
- retrait du film de mise sous vide (6) ;
- retrait du film thermoplastique de démoulage (3),
ledit film thermoplastique de démoulage (3), ayant été traité sur une surface par traitement plasma par au moins un composé choisi dans le groupe formé par les composés silicones, les composés fluorés et les composés carbonés, le traitement plasma étant réalisé préalablement à la mise en place du film thermoplastique de démoulage (3).

2. Procédé selon la revendication *1,* ***caractérisé* en ce que** le film thermoplastique de démoulage est à base d'un polymère choisi dans le groupe formé par les polyesters, les polyamides, les polyoléfines, les polyimides et leurs copolymères, de préférence choisi dans le groupe formé par les polyesters, les polyamides, les polypropylènes, les polyéthylènes, les polyimides et leurs copolymères, et de façon encore plus préférée les polyesters, de préférence le poly(téréphtalate d'éthylène) (PET).

3. Procédé selon une des revendications précédentes, ***caractérisé* en ce que** le film thermoplastique de démoulage présente une épaisseur comprise entre 1 et 500 µm.

4. Procédé selon une des revendications précédentes, ***caractérisé* en ce que** le film thermoplastique de démoulage présente une épaisseur comprise entre 5 et 100 µm.

5. Procédé selon une des revendications précédentes, ***caractérisé* en ce que** le film thermoplastique de démoulage présente une épaisseur comprise entre 5 et 50 µm.

6. Procédé selon une des revendications précédentes, ***caractérisé* en ce que** le film présente des perforations.

7. Procédé selon une des revendications précédentes, ***caractérisé* en ce que** le film thermoplastique de démoulage est associé à un drainant (4), et/ou à un tissu d'arrachage (2).

8. Procédé selon une des revendications précédentes, ***caractérisé* en ce que** le fil thermoplastique de démoulage (3) a été traité sur une surface par traitement plasma par au moins un composé polysiloxane.

9. Procédé selon une des revendications précédentes, ***caractérisé* en ce que** le traitement plasma est un traitement sous vide ou sous atmosphère contrôlée.

10. Procédé selon une des revendications précédentes, ***caractérisé* en ce que** le procédé comprend une étape de mise en place d'un drainant (4), et/ou d'un tissu d'arrachage (2), sur le film thermoplastique de démoulage (3), et une étape de retrait du drainant (4) et/ou du tissu d'arrachage (2).

11. Procédé selon une des revendications précédentes, ***caractérisé* en ce que** le procédé est un procédé par infusion sous vide, une résine à réticuler étant infusée, aspirée par le vide dans le renfort fibreux une fois le vide créé, puis la résine étant réticulée une fois en place.

12. Procédé selon une des revendications 1 à 10, ***caractérisé* en ce que** le procédé est un procédé par infusion sous vide, le matériau thermoplastique étant infusé, aspiré par le vide dans le renfort fibreux une fois le vide créé, puis le matériau fondu étant durci une fois en place.

13. Procédé selon une des revendications 1 à 10, ***caractérisé* en ce que** le procédé est un procédé de moulage sous vide, la résine étant présente dans l'ébauche dès le départ, puis la résine étant réticulée pendant le traitement sous vide.

14. Procédé selon une des revendications 1 à 10, ***caractérisé* en ce que** le procédé est un procédé de moulage sous vide le matériau thermoplastique est présent dans l'ébauche dès le départ, puis le matériau thermoplastique est fondu puis uniformément réparti pendant le traitement sous vide et durci.

## Patentansprüche

1. Verfahren zur Herstellung eines Teils aus einem Verbundwerkstoff durch Formen, umfassend die folgenden Schritte:
- Formung des Rohlings (1) des Verbundwerkstoffteils in einer Form (5), wobei der Rohling eine Faserverstärkung und gegebenenfalls ein Polymerharz oder ein thermoplastisches Material umfasst;
- Auflegen einer thermoplastischen Trennfolie (3), so dass die Oberfläche des Rohlings, die nicht mit der Form in Kontakt steht, vollständig bedeckt ist;
- Auflegen einer Vakuumfolie (6), so dass die thermoplastische Trennfolie (3) bedeckt ist;
- Abdichtung der gesamten Form (5) und der Vakuumfolie (6);
- Herstellen eines Vakuums und Evakuieren der Gase zwischen der Vakuumfolie (6) und der Form (5),
und wenn der Rohling kein Polymerharz oder thermoplastisches Material enthält, Infusion von Polymerharz oder thermoplastischem Material;
- Vernetzung des Polymerharzes oder Schmelzen und gleichmäßiges Verteilen des thermoplastischen Materials;
- Entfernen der Vakuumfolie (6);
- Entfernen der thermoplastischen Trennfolie (3),
wobei die thermoplastische Trennfolie (3) auf einer Oberfläche durch Plasmabehandlung mit mindestens einer Verbindung, ausgewählt aus der Gruppe bestehend aus Silikonverbindungen, Fluorverbindungen und Kohlenstoffverbindungen, behandelt wurde, wobei die Plasmabehandlung vor dem Auflegen der thermoplastischen Trennfolie (3) durchgeführt wurde.

2. Verfahren nach Anspruch 1, **dadurch *gekennzeichnet,* dass** die thermoplastische Trennfolie auf einem Polymer basiert, das aus der Gruppe bestehend aus Polyestern, Polyamiden, Polyolefinen, Polyimiden und deren Copolymeren ausgewählt wurde, bevorzugt aus der Gruppe bestehend aus Polyestern, Polyamiden, Polypropylenen, Polyethylenen, Polyimiden und deren Copolymeren ausgewählt wurde, und noch bevorzugter aus Polyestern, bevorzugt Polyethylenterephthalat (PET), ausgewählt wurde.

3. Verfahren nach einem der vorstehenden Ansprüche, **dadurch *gekennzeichnet,* dass** die thermoplastische Trennfolie eine Dicke zwischen 1 und 500 µm aufweist.

4. Verfahren nach einem der vorstehenden Ansprüche, **dadurch *gekennzeichnet,* dass** die thermoplastische Trennfolie eine Dicke zwischen 5 und 100 µm aufweist.

5. Verfahren nach einem der vorstehenden Ansprüche, **dadurch *gekennzeichnet,* dass** die thermoplastische Trennfolie eine Dicke zwischen 5 und 50 µm aufweist.

6. Verfahren nach einem der vorstehenden Ansprüche, **dadurch *gekennzeichnet,* dass** die Folie Perforationen aufweist.

7. Verfahren nach einem der vorstehenden Ansprüche, **dadurch *gekennzeichnet,* dass** die thermoplastische Trennfolie mit einem Drainagematerial (4) und/oder einem Abreißgewebe (2) kombiniert ist.

8. Verfahren nach einem der vorstehenden Ansprüche, **dadurch *gekennzeichnet,* dass** der thermoplastische Trennfaden (3) auf einer Oberfläche durch Plasmabehandlung mit mindestens einer Polysiloxanverbindung behandelt wurde.

9. Verfahren nach einem der vorstehenden Ansprüche, **dadurch *gekennzeichnet,* dass** die Plasmabehandlung eine Vakuumbehandlung oder eine Behandlung unter kontrollierter Atmosphäre ist.

10. Verfahren nach einem der vorstehenden Ansprüche, **dadurch *gekennzeichnet,* dass** das Verfahren einen Schritt zum Auflegen eines Drainagematerials (4) und/oder eines Abreißgewebes (2) auf die thermoplastische Trennfolie (3) und einen Schritt zum Entfernen des Drainagematerials (4) und/oder des Abreißgewebes (2) umfasst.

11. Verfahren nach einem der vorstehenden Ansprüche, **dadurch *gekennzeichnet,* dass** das Verfahren ein Vakuuminfusionsverfahren ist, bei dem ein zu vernetzendes Harz infundiert, durch das Vakuum in die Faserverstärkung gesaugt wird, sobald das Vakuum erzeugt ist, und das Harz nach dem Einbringen vernetzt wird.

12. Verfahren nach einem der Ansprüche 1 bis 10, **dadurch *gekennzeichnet,* dass** das Verfahren ein Vakuuminfusionsverfahren ist, bei dem das thermoplastische Material infundiert, durch das Vakuum in die Faserverstärkung gesaugt wird, sobald das Vakuum erzeugt ist, und das geschmolzene Material nach dem Einbringen ausgehärtet wird.

13. Verfahren nach einem der Ansprüche 1 bis 10, **dadurch *gekennzeichnet,* dass** das Verfahren ein Vakuumformverfahren ist, bei dem das Harz von Anfang an im Rohling vorhanden ist, und das Harz dann während der Vakuumbehandlung vernetzt wird.

14. Verfahren nach einem der Ansprüche 1 bis 10, **dadurch *gekennzeichnet,* dass** das Verfahren ein Vakuumformverfahren ist, das thermoplastische Material von Anfang an im Rohling vorhanden ist, dann das thermoplastische Material geschmolzen und während der Vakuumbehandlung gleichmäßig verteilt und ausgehärtet wird.

## Claims

1. A method for manufacturing a part made of a composite material by moulding, comprising the following steps:
- forming the blank (1) of the part made of composite material in a mould (5), said blank comprising a fibrous reinforcement and optionally a polymer resin or a thermoplastic material;
- placing a thermoplastic release film (3), so as to completely cover the surface of said blank that is not in contact with the mould;
- placing a vacuum film (6), so as to cover the thermoplastic release film (3);
- sealing the assembly consisting of the entire mould (5) and the vacuum film (6);
- vacuum packing and discharging gases between the vacuum film (6) and the mould (5),
and when the blank does not comprise polymer resin or thermoplastic material, infuse a polymer resin or a thermoplastic material;
- crosslinking the polymer resin, or melting and distributing uniformly the thermoplastic material;
- removing the vacuum film (6);
- removing the thermoplastic release film (3), said thermoplastic release film (3) having been treated on a surface by plasma treatment with at least one compound chosen from the group formed by silicone compounds, fluorinated compounds and carbonaceous compounds, the plasma treatment being carried out before placing the thermoplastic release film (3).

2. The method as claimed in claim *1, **characterised in that*** the thermoplastic release film is based on a polymer selected from the group formed by polyesters, polyamides, polyolefins, polyimides and their copolymers, preferably selected from the group formed by polyesters, polyamides, polypropylenes, polyethylenes, polyimides and their copolymers, and even more preferably polyesters, preferably polyethylene terephthalate(PET).

3. The method according to any one of the preceding claims, ***characterised in that*** the thermoplastic release film has a thickness of between 1 and 500 µm.

4. The method according to any one of the preceding claims, ***characterised in that*** the thermoplastic release film has a thickness of between 5 and 100 µm.

5. The method according to any one of the preceding claims, ***characterised in that*** the thermoplastic release film has a thickness of between 5 and 50 µm.

6. The method according to one of the preceding claims, ***characterised in that*** the film has perforations.

7. The method according to any one of the preceding claims, ***characterised in that*** the thermoplastic release film is associated with a draining agent (4) and/or a tear-off fabric (2).

8. The method according to any one of the preceding claims, ***characterised in that*** the thermoplastic release film (3) has been processed on a surface by plasma treatment with at least one polysiloxane compound.

9. The method according to any one of the preceding claims, ***characterised in that*** the plasma treatment is a treatment under vacuum or under a controlled atmosphere.

10. The method according to any one of the preceding claims, ***characterised in that*** the method comprises a step of placing a draining agent (4), and/or a tear-off fabric (2), on the thermoplastic release film (3), and a step of removing the draining agent (4) and/or the tear-off fabric (2).

11. The method according to any one of the preceding claims, ***characterised in that*** the method is a vacuum infusion method, a resin to be crosslinked being infused, drawn by vacuum into the fibrous reinforcement once the vacuum has been created, and then the resin being crosslinked once in place.

12. The method according to any one of claims 1 to 10, ***characterised in that*** the method is a vacuum infusion method, the thermoplastic material being infused, drawn by vacuum into the fibrous reinforcement once the vacuum has been created, and then the molten material being cured once in place.

13. The method according to any one of claims 1 to 10, ***characterised in that*** the method is a vacuum moulding method, the resin being present in the blank from the start, and then the resin being crosslinked during the vacuum treatment.

14. The method according to any one of claims 1 to 10, ***characterised in that*** the method is a vacuum moulding method, the thermoplastic material is present in the blank from the start, then the thermoplastic material is melted and then uniformly distributed during the vacuum treatment and hardened.
